# FASCICULE DE BREVET EUROPEEN

(11) **EP 4 100 696 B1**
(45) Date de publication et mention de la délivrance du brevet: **14.10.2026**
(21) Numéro de dépôt: 21707347.7
(22) Date de dépôt: 03.02.2021
(51) Int. Cl.: G01C 21/16

(54) **PROCEDE D'AIDE À LA NAVIGATION D'UN PORTEUR MOBILE**
NAVIGATIONSUNTERSTÜTZUNGSVERFAHREN FÜR EINEN MOBILEN TRÄGER
NAVIGATION ASSISTANCE METHOD FOR A MOBILE CARRIER

(30) Priorité: 03.02.2020 FR 2001069
(43) Date de publication de la demande: 14.12.2022
(73) Titulaire: SAFRAN, 75015 Paris (FR); Association pour la Recherche et le Développement Des Méthodes et Processus Industriels - A.R.M.I.N.E.S., 75006 Paris (FR)
(72) Inventeur: CHAUCHAT, Paul, 77550 MOISSY-CRAMAYEL (FR); BARRAU, Axel, 77550 MOISSY-CRAMAYEL (FR); BONNABEL, Silvère, NOUMEA, 98800 (NC)
(74) Mandataire: Regimbeau
(86) Numéro de dépôt international: PCT/FR2021/050199
(87) Numéro de publication internationale: WO 2021/156569

(56) Documents cités:
- US-A1- 2016 005 164
- MOURIKIS A I ET AL: "SC-KF Mobile Robot Localization: A Stochastic Cloning Kalman Filter for Processing Relative-State Measurements", IEEE TRANSACTIONS ON ROBOTICS, IEEE SERVICE CENTER, PISCATAWAY, NJ, US, vol. 23, no. 4, 1 August 2007 (2007-08-01), pages 717 - 730, XP011189539, ISSN: 1552-3098, DOI: 10.1109/TRO.2007.900610
- EMTER THOMAS ET AL: "Stochastic Cloning and Smoothing for Fusion of Multiple Relative and Absolute Measurements for Localization and Mapping", 2018 15TH INTERNATIONAL CONFERENCE ON CONTROL, AUTOMATION, ROBOTICS AND VISION (ICARCV), IEEE, 18 November 2018 (2018-11-18), pages 1508 - 1513, XP033480948, DOI: 10.1109/ICARCV.2018.8581384

## Description

### DOMAINE DE L'INVENTION

La présente invention se rapporte au domaine du suivi de la localisation d'une centrale de navigation.

La présente invention concerne plus particulièrement un procédé d'aide à la navigation d'un porteur mobile, et une centrale inertielle de navigation mettant en œuvre ledit procédé.

### ETAT DE LA TECHNIQUE

Dans le domaine de l'estimation de la trajectoire d'une centrale inertielle à partir de ses mesures et de mesures extérieures provenant de différents capteurs (GPS, caméra, LiDar, odomètre, etc), un filtre de Kalman est un outil bien connu pour suivre la navigation d'un porteur tel qu'un navire, un aéronef ou un véhicule terrestre, c'est-à-dire sa position, sa vitesse, son accélération, etc.

Le filtre de Kalman estime au cours d'itérations successives un état de navigation du porteur via des équations matricielles, donc linéaires, au moyen de mesures bruitées fournies par des capteurs de navigation.

La centrale est alors assimilée à un système dynamique régi par des équations linéaires, ce qui constitue une limitation contraignante.

Pour étendre le filtre de Kalman à des systèmes dynamiques régis par des équations non-linéaires, il a été proposé un procédé désigné sous l'expression de « filtre de Kalman étendu » (EKF). Cette évolution propose une étape supplémentaire consistant à linéariser, à chaque nouvelle itération du filtre, les équations régissant le système non-linéaire en un point de l'espace vectoriel, ce point étant typiquement un état estimé au cours d'une itération précédente. Les matrices issues de cette linéarisation peuvent être ainsi utilisées pour calculer un nouvel état estimé selon la méthode du filtre de Kalman classique.

Les filtres de Kalman étendus connus présentent toutefois l'inconvénient de ne pas fonctionner correctement si le point de linéarisation est trop éloigné de l'état réel de navigation du porteur.

Or, dans certains contextes de suivi de navigation, aucune estimation précise de l'état de navigation de la centrale n'est disponible au démarrage du filtre, si bien que la mise en œuvre des itérations successives du filtre de Kalman étendu ne permet pas de converger vers une estimation précise de l'état.

On connait également une méthode de l'état de l'art appelée « lissage » qui consiste à calculer la trajectoire conduisant à des mesures les plus proches possibles des observations, en pondérant l'importance accordée à chaque mesure par la précision du capteur qui l'a produite.

Par opposition au filtrage de Kalman qui traite les mesures séquentiellement et utilise chacune d'elles une seule fois, le lissage permet de « revenir en arrière » pour corriger des calculs à la lumière des dernières observations disponibles. Cet avantage rend cette approche importante pour l'utilisation de certains types de capteurs comme par exemple des caméras.

Cependant, un défaut majeur du lissage a été identifié sur son utilisation potentielle dans des centrales de navigation de haute précision. En effet, les performances obtenues se dégradent fortement lorsqu'on remplace les calculateurs 64 bits utilisés par des ordinateurs classiques, par des calculateurs 32 bits, ou même 16 bits utilisés en général par les systèmes embarqués. Ce phénomène de dégradation, dû à l'accumulation d'imprécisions dans les calculs numériques, est très dangereux, car il peut conduire à la validation d'un algorithme en phase de prototypage qui ne pourra en fait jamais être mis en œuvre sur un produit final. La cause du problème a été identifiée comme étant l'utilisation de l'inverse de matrices très mal conditionnées (problème connu pour conduire à des erreurs numériques importantes).

Emter Thomas et AI: "Stochastic Cloning and Smoothing for Fusion of Multiple Relative and Absolute Measurements for Localization and Mapping", 2018 15TH INTERNATIONAL CONFERENCE ON CONTROL, AUTOMATION, ROBOTICS AND VISION (ICARCV) divugue un procédé de navigation autonome pour un robot mobile. À cette fin, on utilise des techniques de fusion de capteurs afin de combiner les mesures provenant de plusieurs sources de données.

Il existe donc un besoin d'améliorer les techniques de l'art antérieur.

### EXPOSE DE L'INVENTION

Un but de l'invention est d'estimer la trajectoire d'une centrale inertielle à partir de ses mesures et de mesures extérieures provenant de différents capteurs.

Un autre but de l'invention est de proposer un procédé qui soit plus adapté à une exécution sur des centrales inertielles de navigation de haute précision que les solutions de l'art antérieur présentées ci-dessus. La solution est présentée dans les revendications.

Il est dès lors proposé un procédé d'aide à la navigation d'un porteur mobile comportant une centrale inertielle de navigation comportant au moins un capteur inertiel, dans lequel, sur une fenêtre d'observations déterminée, les étapes suivantes sont mises en œuvre par une unité d'estimation de la centrale inertielle de navigation :
- paramétrisation d'un système non-linéaire estimant un état de navigation du porteur mobile à une itération n en fonction d'un modèle cinématique et/ou de mesures acquises par au moins un capteur inertiel ;
- linéarisation dudit système autour de l'état de navigation estimé ;
- estimation par un filtre de Kalman et clonage stochastique d'un premier correctif de l'état de navigation estimé du porteur ;
- estimation d'un second correctif par un filtre d'information fonctionnant à rebours et utilisant lui aussi un clonage stochastique ;
- détermination d'un troisième correctif par fusion des premier et second correctifs; et
- correction de l'état de navigation estimé à l'itération n+1 en fonction du troisième correctif.

Le procédé comporte également une ou plusieurs des caractéristiques suivantes :
- L'étape d'estimation par le filtre de Kalman et clonage stochastique du premier correctif est réalisée au cours de pas de temps successifs de calcul d'un correctif de l'état de navigation estimé du porteur, un pas de temps du filtre comprenant des étapes de :
   ∘ propagation d'un état de navigation précédent du porteur en un état propagé en fonction d'un modèle cinématique et/ou de mesures acquises par au moins un capteur inertiel ,
   ∘ mise à jour de l'état propagé en fonction de mesures directes ou relatives acquises par au moins un capteur complémentaire ;
- l'étape d'estimation du second correctif par le filtre d'information et clonage stochastique du premier correctif est réalisée au cours de pas de temps successifs, et comporte pour un pas de temps du filtre d'information les étapes de:
   ∘ rétropropagation d'un correctif de l'état de navigation postérieur du porteur en un correctif de l'état propagé en fonction d'un modèle cinématique et/ou de mesures acquises par au moins un capteur inertiel ,
   ∘ mise à jour du correctif de l'état propagé en fonction de mesures directes ou relatives acquises par au moins un capteur complémentaire .
- Dans l'étape d'estimation par le filtre de Kalman et clonage stochastique du premier correctif, le correctif de l'état de navigation propagé par le filtre kalman comporte un clone d'un correctif de l'état de navigation antérieur au correctif de l'état de navigation propagé, tant que ledit correctif de l'état de navigation antérieur intervient dans une mesure relative d'un correctif d'état ultérieur au correctif de l'état de navigation propagé, et dans lequel dans l'étape d'estimation du second correctif par le filtre d'information fonctionnant à rebours et clonage stochastique, le correctif de l'état de navigation rétropropagé par le filtre d'information fonctionnant à rebours comporte un clone d'un correctif d'état de navigation ultérieur au correctif de l'état de navigation rétropropagé, tant que ledit correctif de l'état de navigation ultérieur intervient dans une mesure relative d'un correctif d'état antérieur au correctif de l'état de navigation propagé.
- L'état de navigation à estimer est formulé sous la forme suivante $X * = {argmin}_{X} {\sum }_{k} {\left‖{ψ}_{k}\left(X\right)\right‖}_{{P}_{k}}^{2} ,$ où les *ψₖ* sont des fonctions de coût associées aux mesures de chaque capteur, *Pₖ* est la matrice de covariance associée à la k-ème mesure, c'est-à-dire l'incertitude qu'on lui associe, la notation ${\left‖e\right‖}_{{P}_{k}}^{2} = {e}^{T} {P}_{k}^{- 1} e$ représente une norme euclidienne pondérée par l'inverse de la matrice *Pₖ*.
- Le système non-linéaire estimant un état de navigation *X* du porteur mobile est linéarisé autour d'un état de navigation estimé, pour définir un correctif δXₙ^{*} à l'état estimé sous la forme suivante : ${δX}_{n}^{∗} = {argmin}_{δX} {\sum }_{k} {\left‖{A}_{k}δX-{b}_{k}\right‖}_{{P}_{k}}^{2} .$
- L'étape de propagation met en œuvre une matrice de transition augmentée sous la forme [*^{Id} _{F}*], avec F correspondant à une matrice de transition qui relie un correctif d'état précédent à un correctif d'état actuel *k,* et *Id* une matrice identité de dimension égale au nombre de clones des états passés.
- L'étape de mise à jour met en œuvre une matrice d'observation augmentée sous la forme *H̃* = [...Hᵢ ...*Hⱼ* ...], les blocs étant d'indices *i* et *j*, le reste étant composé de zéros.

Le procédé proposé permet de reformuler le calcul du « maximum a posteriori », MAP, utilisé dans le lissage, de façon à ne faire apparaître l'inverse de ces matrices que de façon implicite pour ainsi éviter de subir les effets des approximations numériques.

Le procédé proposé permet également d'étendre le lisseur de Kalman à des problèmes couplant des mesures inertielles et des mesures quelconques, directes et/ou relatives, des états, le procédé se base sur l'utilisation jointe du lisseur et de la méthode dite de « clonage stochastique ». Ceci permet d'effectuer, entre autres, des fusions inertie-vision et inertie-LiDar basées sur le Maximum a posteriori numériquement stables, même en utilisant des centrales de navigation de haute précision, et dans des architectures embarquées à capacités de calculs réduites.

Selon un deuxième aspect, l'invention propose en outre une unité d'estimation d'un porteur mobile configurée pour mettre en œuvre le procédé d'aide à la navigation d'un porteur mobile qui précède.

Selon un troisième aspect, l'invention propose une centrale inertielle de navigation d'un porteur mobile comprenant une interface de réception de mesures inertielles acquises par au moins un capteur inertiel, une interface de réception de mesures complémentaires acquises par au moins un capteur complémentaire, une unité d'estimation selon le second aspect pour estimer un état de navigation de la centrale à partir de mesures acquises par l'interface de réception de mesures inertielles et l'interface de réception de mesures complémentaires.

Il est également proposé un produit programme d'ordinateur comprenant des instructions de code de programme pour l'exécution des étapes du procédé qui précède, lorsque ce programme est exécuté par une unité d'estimation, selon le second aspect, d'une trajectoire d'un porteur mobile.

### DESCRIPTION DES FIGURES

D'autres caractéristiques, buts et avantages de l'invention ressortiront de la description qui suit, qui est purement illustrative et non-limitative, et qui doit être lue en regard des dessins annexés sur lesquels :
- la figure 1 représente une centrale de navigation pour un porteur mobile selon un mode de réalisation de l'invention,
- les figures 2 et 3 illustrent les étapes d'un procédé de suivi de localisation d'une centrale de navigation d'un porteur mobile, selon un mode de réalisation de l'invention,
- les figures 4A, 4B, 4C représentent un diagramme temporel illustrant des instants d'arrivées de mesures acquises et des durées de traitements opérés par une centrale de navigation selon un mode de réalisation de l'invention, et les figures 4D et 4E représentent un diagramme temporel illustrant des instants d'arrivées de mesures acquises et des durées de traitements opérés par une centrale de navigation selon des modes de réalisation différents de l'invention.

### DESCRIPTION DETAILLEE DE L'INVENTION

On entend par « clonage stochastique » une augmentation de l'état d'un système par duplication des états passés impliqués dans une observation future.

On entend par « correctif d'un état de navigation » l'estimation de la différence entre l'état estimé et l'état réel du système.

On entend par fusion de deux correctifs : le calcul d'un correctif consolidé issu de deux correctifs préalablement obtenus, habituellement par l'application d'une moyenne pondérée. Les poids sont de préférence obtenus par la matrice d'information issue du filtre d'information et l'inverse de la matrice de covariance issue du filtre de Kalman.

On entend par « filtre d'information fonctionnant à rebours » un calcul récursif du vecteur et de la matrice d'information d'une loi gaussienne représentant l'information issue des états futurs, effectué depuis le dernier vers le premier pas de temps de la fenêtre.

On entend par « état de navigation » un ensemble de variables représentatives au moins de l'orientation et de la position ou de l'orientation et de la vitesse d'un porteur, à un instant donné ou au cours d'une série d'instants.

Dans ce qui suit les covariances des mesures sont notées P avec un indice en bas, et les covariances retournées par le filtre de Kalman sont notées P avec un indice en haut.

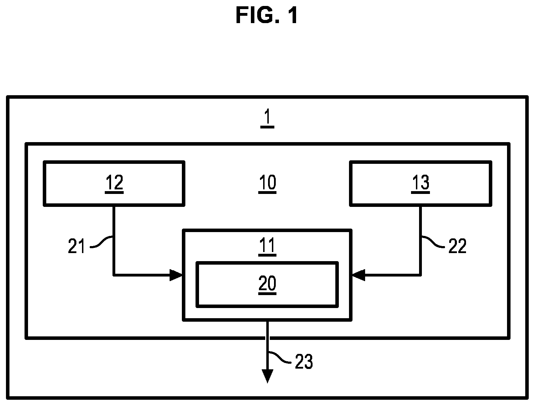

En référence à la **figure 1****,** une centrale inertielle 10 est embarquée sur un porteur mobile 1, tel qu'un véhicule terrestre, un hélicoptère, un avion, etc. La centrale inertielle 10 comporte plusieurs parties : des capteurs inertiels 12, des capteurs complémentaires 13, et une unité d'estimation 11 pour mettre en oeuvre des calculs d'estimation. Ces parties peuvent être physiquement séparées les unes des autres.

Les capteurs inertiels 12 sont typiquement des accéléromètres et/ou des gyromètres mesurant respectivement des forces spécifiques et des vitesses de rotation que subit le porteur par rapport à un référentiel inertiel. La force spécifique correspond à l'accélération d'origine non gravitationnelle. Lorsque ces capteurs sont fixes par rapport au porteur, la centrale est dite de type « strap down ».

Les capteurs complémentaires 13 sont variables selon le type de porteur, sa dynamique, et l'application visée. Les centrales inertielles utilisent typiquement un récepteur GNSS (GPS par exemple). Pour un véhicule terrestre, il peut s'agir également d'un ou de plusieurs odomètres. Pour un bateau, il peut s'agir d'un « loch », donnant la vitesse du bateau par rapport à celle de l'eau ou du fond marin. Les caméras ou radar par exemple de type LiDar, forment un autre exemple de capteurs complémentaires 13.

Les données de sortie de l'unité d'estimation 11 sont un état représentatif de la navigation du porteur, appelé dans la suite état de navigation x et éventuellement d'états internes de la centrale inertielle 10.

On distingue différents types de mesures, en fonction du type de capteur dont elles sont issues. Ainsi, on distingue :
- les mesures inertielles qui lient deux états consécutifs *xⁱ* et *x*^{*i*+*1*} ;
- les mesures directes ne faisant intervenir qu'un seul des *xⁱ* à la fois, comme des mesures GPS ; et
- les mesures relatives, c'est-à-dire qu'elles lient au moins deux états *xⁱ* et *x^{j}* qui peuvent ne pas être consécutifs. C'est le cas par exemple des mesures obtenues avec des caméras ou des LiDar.

Cet état de navigation peut comprendre au moins une variable de navigation du porteur (position, vitesse, accélération, orientation, etc.). L'état de navigation peut en tout état de cause être représenté sous la forme d'un vecteur dont chaque composante est une variable de navigation du porteur.

L'unité d'estimation 11 comprend notamment un algorithme configuré pour fusionner les informations données par les capteurs complémentaires 13 et les capteurs inertiels 12 de façon à fournir une estimation optimale des informations de navigation. La fusion est faite d'après un système dynamique continu ou discret servant de modèle pour prédire l'état à chaque instant à partir de l'état à l'instant précédent, à l'aide d'une fonction de propagation f non linéaire, ainsi que la façon de l'observer à l'aide d'une fonction d'observation h pouvant être non linéaire également. Un tel système est non-linéaire.

Les grandeurs estimées seront dans la suite notées avec des chapeaux (*x̂*) et les grandeurs réelles sans chapeaux (x).

L'unité d'estimation 11 comporte une interface primaire 21 de réception de mesures acquises par les capteurs inertiels 12, une interface secondaire 22 de réception de mesures acquises par les capteurs complémentaires 13, et au moins un processeur 20 configuré pour mettre en œuvre le procédé ci-dessous décrit.

Le lissage est un algorithme susceptible d'être codé sous la forme d'un programme d'ordinateur exécutable par le processeur 20.

L'unité d'estimation 11 comprend en outre une sortie 23 pour délivrer des données de sorties calculées par le processeur 20.

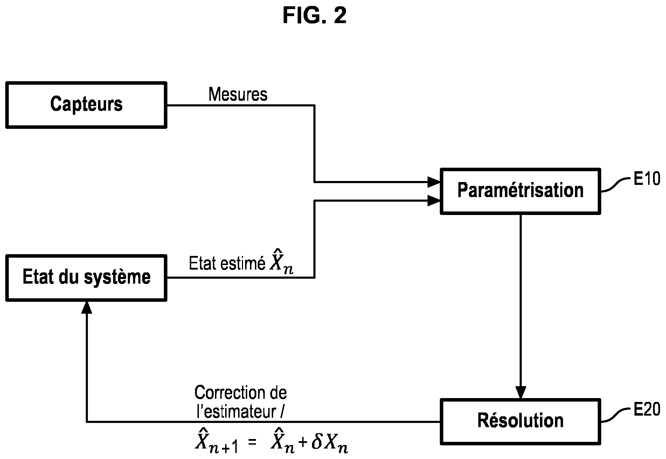

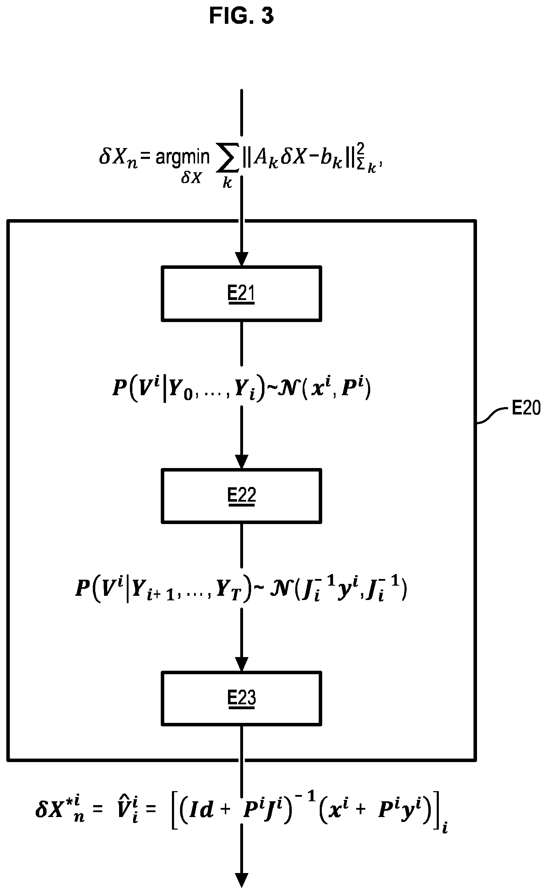

En référence aux **figures 2** **et** **3****,** il est illustré certaines étapes d'un procédé d'aide à la navigation d'un porteur mobile comportant une centrale inertielle de navigation, mis en œuvre par l'unité d'estimation 11 selon un mode de réalisation de l'invention.

Dans le cadre de ce procédé, on estime la trajectoire suivie par le porteur, l'état de navigation dudit porteur étant le dernier état de ladite trajectoire. A partir d'une trajectoire *X̂ₙ* estimée d'une quelconque manière, un procédé permet de déterminer un correctif à appliquer à ladite trajectoire pour obtenir une trajectoire corrigée pouvant prendre en compte les informations données, à tout instant de la navigation, par les capteurs complémentaires 13 et les capteurs inertiels 12 de façon à fournir une estimation optimale des informations de navigation.

La trajectoire *X̂ₙ* étant estimée par un problème non-linéaire, dans une étape E10, dite de paramétrisation, il est mis en œuvre la manière dont un système non-linéaire est configuré pour décrire une évolution d'un état de navigation du porteur mobile 1 . En conséquence, le système après linéarisation forme un problème de moindres carrés linéaires à résoudre pour déterminer une correction *δXₙ*^{*} de la trajectoire estimée *X̂ₙ*.

La trajectoire associée au MAP est définie par un problème d'optimisation non linéaire sous la forme $X * = {argmin}_{X} {\sum }_{k} {\left‖{ψ}_{k}\left(X\right)\right‖}_{{P}_{k}}^{2}$ où :
- les *ψₖ* sont des fonctions de coût associées aux mesures de chaque capteur,
- *Pₖ* est la matrice de covariance associée à la kième mesure, c'est-à-dire l'incertitude qu'on lui associe,
- la notation ${\left‖e\right‖}_{{P}_{k}}^{2} = {e}^{T} {P}_{k}^{- 1} e$ représente une norme euclidienne pondérée par l'inverse de la matrice *Pₖ*.

La trajectoire *X̂ₙ* estimée peut-être ensuite corrigée au cours d'une itération du procédé. Le procédé repose sur une résolution itérative du problème d'optimisation non-linéaire par linéarisations successives du problème. On cherche ainsi une suite de solutions sous la forme ${\hat{X}}_{n + 1} = {\hat{X}}_{n} + {δX}_{n}^{*}$*,* en cherchant à minimiser un système linéaire approximant le problème d'optimisation du MAP, ce qui amène à résoudre une succession de problèmes de moindres carrés linéaires de la forme : ${δX}_{n}^{∗} = {argmin}_{δX} {\sum }_{k} {\left‖{A}_{k}δX-{b}_{k}\right‖}_{{P}_{k}}^{2}$ où les matrices *Aₖ* et les vecteurs *bₖ* dépendent des mesures, de *X̂ₙ,* et de la paramétrisation choisie. Le procédé considérant une trajectoire, ou partie de celle-ci, composée de plusieurs états successifs, *δXₙ* est en fait composé de plusieurs blocs représentant chacun un de ces états : ${{δX}_{n}}^{1} , … , {{δX}_{n}}^{p}$*.*

Le problème rencontré vient du fait que les méthodes standards de résolution de ces problèmes linéaires nécessitent le calcul explicite de *Pₖ⁻¹*, qui peut entrainer de graves problèmes numériques dans le cas de centrales inertielles de haute précision, notamment sur des architectures embarquées fonctionnant avec des moyens de calcul réduits, avec des cartes 32 bits, voire 16 bits.

Une alternative qui peut être également appliquée dans le procédé proposé consiste à ne pas considérer *Pₖ* mais sa racine carrée, une matrice *Sₖ* telle que *Pₖ = Sₖ Sₖ^{T},* que l'on évite aussi d'inverser.

Ainsi le système non-linéaire est linéarisé autour d'un état de navigation (étape E20). L'état de navigation à l'itération n est composé de la séquence d'états *X̂ₙ*. On considère que le système est initialisé à la première itération par un premier état a priori. Cet état peut être quelconque.

Une fois le problème linéarisé (étape E20), sont réalisées les étapes E21, E22, E30 de résolution de ce système. Un algorithme de résolution est proposé, qui trouve la solution exacte du problème de moindres carrés linéaire, mais permet d'éviter les problèmes de stabilité numérique qui pourraient apparaître avec une centrale de trop haute précision.

Pour cela, il est utilisé le fait que le problème de moindres carrés peut être résolu sans instabilité numérique par une méthode appelée lisseur de Kalman complétée avec une méthode dite de « clonage stochastique », permettant de faire varier le nombre d'états du système afin qu'il s'écrive sous une forme compatible avec le lisseur de Kalman.

Ce lisseur, s'appliquant à des systèmes linéaires, est construit sur la sortie d'un filtre de Kalman, c'est à dire qu'il permet de corriger les estimés issus du filtre de Kalman en incluant l'information contenue dans les observations venant du futur. Ainsi, pour appliquer ce lisseur, il faut tout d'abord parcourir les données dans le sens "direct", c'est à dire de l'instant i= 1 à l'instant i = T (où T est la durée de la fenêtre d'observation), en leur appliquant un filtre de Kalman. Le filtre d'information, qui fonctionne à rebours, c'est à dire de l'instant k = T à l'instant k = 1, peut alors être appliqué. Par conséquent, à l'issue du lisseur, l'estimé de l'état au temps i ne tient pas seulement compte des observations passées Y1, ..., Yi mais de toutes les observations contenues dans la fenêtre d'observation Y1, ..., YT.

De façon connue, un filtre de Kalman KF est un estimateur récursif décrit pas un système linéaire. Ici, ces états linéarisés sont les corrections à appliquer aux états de navigation de la trajectoire.

Le filtre est initialisé avec un état initial, qui servira d'entrée pour un premier pas de temps du filtre. Chaque pas de temps suivant du filtre prend en entrée un état estimé par un pas de temps précédent du filtre, et fournit une nouvelle estimation de l'état linéarisé (ou correction) du porteur.

Un pas de temps du filtre de Kalman comprend classiquement deux étapes : une propagation, et une mise à jour.

L'étape de propagation détermine un état linéarisé propagé du porteur à partir de l'état linéarisé précédent (ou l'état linéarisé initial pour la première itération), et ce au moyen de la fonction de propagation linéarisée.

Le filtre de Kalman permet de réaliser l'approximation de la moyenne et de la variance de la distribution de probabilité conditionnelle d'un état linéarisé sachant toutes les observations passées, i.e. jusqu'à cet instant.

Il existe un cadre très précis dans lequel *δXₙ*^{*} peut être obtenu sans devoir calculer les inverses des matrices *Pₖ* associées à des mesures d'une centrale inertielle : celui où les mesures se séparent en deux catégories :
- les mesures inertielles, issues des capteurs inertiels 12, qui lient *δXₙⁱ* et *δXₙⁱ⁺¹*, dont les covariances sont notées Q, et
- des mesures directes, issues des capteurs complémentaires 13, ne faisant intervenir qu'un seul des *xⁱ* à la fois, comme des mesures GPS.

En effet, dans ce cas, le lisseur de Kalman peut être employé pour résoudre le problème, et une de ses formulations récentes permet de ne pas avoir à inverser les matrices problématiques.

Celle-ci utilise une seconde estimation par le filtre de Kalman, cette fois-ci appliqué dans le sens à rebours des observations sous une forme connue par ailleurs appelée « filtre d'information », fournissant un second correctif. Celui-ci est alors fusionné avec le résultat du premier filtre de Kalman.

Le lisseur de Kalman permet d'obtenir les moyennes *x¹,* ..., *x^{p}* recherchées,

Cependant, le lisseur de Kalman ne s'applique pas en tant que tel dans d'autres cas, notamment lorsque les mesures autres qu'inertielles sont des mesures relatives, c'est-à-dire qu'elles lient au moins deux états *δXₙⁱ* et *δXₙ^{j}.* C'est le cas par exemple des mesures obtenues avec des caméras ou des LiDar.

Pour tous les capteurs complémentaires 13, les covariances des mesures associées sont notées *R*.

Pour pouvoir étendre le lisseur de Kalman à des problèmes couplant des mesures inertielles et des mesures quelconques, directes et/ou relatives, des états, le procédé se base sur l'utilisation jointe du lisseur et de la méthode dite de « clonage stochastique », détaillée ci-après. Ceci permet d'effectuer, entre autres, des fusions inertie-vision et inertie-LiDar basées sur le Maximum a posteriori numériquement stables, même en utilisant des centrales de navigation de haute précision, et dans des architectures embarquées à capacités de calculs réduites.

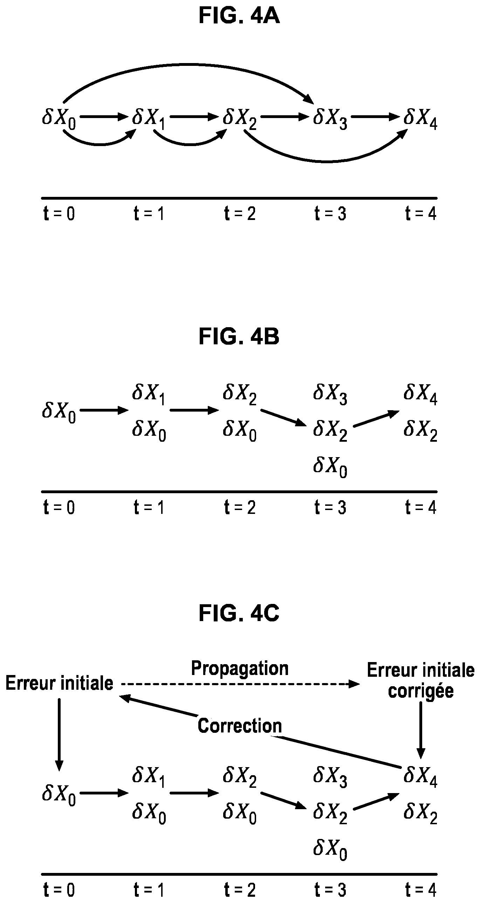

En référence à la **figure 4A****,** il est illustré un exemple de trajectoire à estimer par lissage sur une période de temps déterminée. Les flèches droites entre deux états successifs indiquent des mesures inertielles, les flèches courbes désignent des mesures relatives entre deux états qui peuvent ne pas être successifs

L'utilisation du clonage stochastique est illustrée en **figure 4B****.** Ainsi, l'état évolue en récupérant des clones des états passés qui interviennent dans des mesures ultérieures, par exemple *δX₀* qui aura un impact direct sur *δX₃.* L'utilisation du clonage stochastique est représentée par des états alternatifs *V¹*, ..., *V^{p}* dont la taille varie au cours du temps, car ils contiendront en mémoire des clones des états passés, tant que ceux-ci interviennent dans une mesure avec un état ultérieur. L'état alternatif V est donc formé de *δXⁱ* et de clones d'anciens états *δX^{j1}, ..., δX^{jm}.*

La **figure 4C** illustre les avantages de l'utilisation jointe du lisseur et de la méthode dite de « clonage stochastique » avec une forte erreur de linéarisation. Ainsi, la propagation de l'information est numériquement stable, et la correction de l'erreur initiale amenée par le lissage est donc bien prise en compte, pour obtenir une estimation de meilleure qualité.

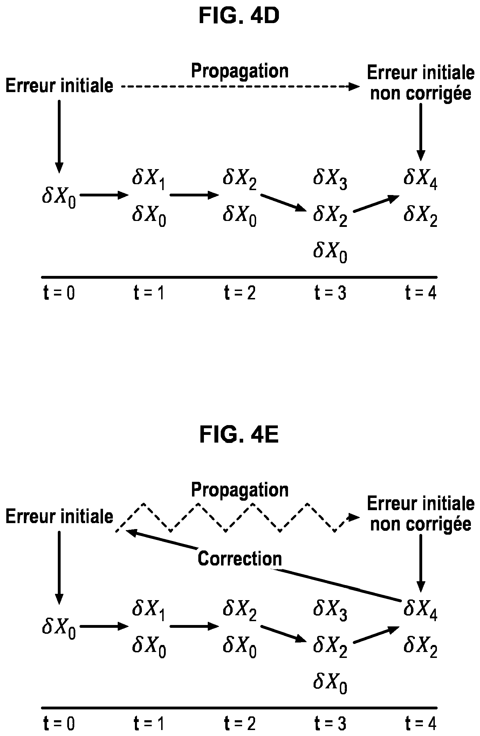

En comparaison, la **figure 4D** illustre les limites de l'application du filtrage de Kalman avec clonage stochastique. Ainsi, une forte erreur de linéarisation, comme il peut en exister en fusion inertie-vision, est propagée et jamais rattrapée par la suite, ce qui peut conduire à une estimation de moins bonne qualité, voire incohérente.

La **figure 4E** illustre les avantages théoriques et les limites pratiques du lissage classique par rapport à la méthode illustrée sur l'exemple des figures 3 et 4. Théoriquement, l'erreur initiale de linéarisation doit être corrigée grâce aux mesures ultérieures. Cependant, les erreurs numériques des implémentations classiques prennent le pas et dégradent fortement l'estimation dans les faits

L'utilisation jointe du lisseur et de la méthode dite de « clonage stochastique » peut être mise en œuvre par l'algorithme suivant.

En particulier, on cherche à calculer à chaque itération un premier correctif (étape E21) et un deuxième correctif (étape E22) de l'état de navigation à l'itération considérée.

Dans une étape E21, pour appliquer ce lisseur, les données sont parcourues dans le sens "direct", c'est à dire de l'instant *i =* 0 à l'instant *i = T* (où *T* est la durée de la fenêtre d'observation), en leur appliquant un filtre de Kalman pour déterminer un vecteur *xⁱ* et une matrice *Pⁱ,* représentatifs de l'information jusqu'à l'instant *i,* i.e. $P \left({V}^{i}\left|{Y}_{0},…,{Y}_{i}\right.\right) ∼ N \left({x}^{i}, {P}^{i}\right)$

En particulier, la correction associée à l'état *i* sera donnée par le dernier bloc de V, donc sa moyenne par le dernier bloc de *xⁱ*, et sa covariance par le bloc en bas à droite de *Pⁱ* : $P \left({δX}_{n}^{i}\left|{Y}_{0},…,{Y}_{i}\right.\right) ∼ N \left({x}_{i}^{i}, {P}_{ii}^{i}\right)$
[1] initialisation ${x}^{0} = {δX}_{n}^{0} , {P}^{0} = {P}_{0}$
[2] pour chaque itération i
[3] Si *δXₙⁱ⁻¹* est impliqué dans une mesure ultérieure, clonage de *δXₙⁱ⁻¹* dans la moyenne *Xⁱ⁻¹* de l'état alternatif. La covariance *Pⁱ⁻¹* est étendue en dédoublant la dernière ligne, puis la dernière colonne
[4] Propagation de l'état étendu : ${x}^{i} ← {F}^{˜} {x}^{i - 1} avec {F}^{˜} = \left[\begin{matrix}Id & \\ & F\end{matrix}\right]$ la matrice identité étant de dimension égale au nombre de clones mémorisés dans l'état alternatif. La covariance est propagée classiquement.
[5] S'il y a une mesure entre i et j avec j<i
[6] Mise à jour selon les équations connues du gain de Kalman avec ${H}^{˜} = \left[…{H}_{i}…{H}_{j}…\right]$ les blocs étant d'indices i et j
[7] si *δXₙ^{j}* n'est pas impliqué dans une mesure ultérieure, suppression de *δXₙ^{j}* dans l'état alternatif : suppression du bloc, des lignes et colonnes associées dans *xⁱ* et *Pⁱ*.

Dans une étape E22, le lisseur est appliqué pour récursivement calculer la distribution a posteriori $P \left({V}^{i}\left|{Y}_{i + 1},…,{Y}_{T}\right.\right)$ , sous forme représentative de l'information à partir de l'instant *i,* c'est-à-dire via un vecteur yⁱ et une matrice d'information Jⁱ encodant une distribution normale $N \left({J}_{i}^{- 1}{y}^{i},{J}_{i}^{- 1}\right)$ La matrice Jⁱ correspond donc à l'inverse de la matrice de covariance associée à cette distribution.
[1] initialisation *y⁰=0, j⁰=0*
[2] pour chaque itération i allant de n à 0
[3] Si *δXₙⁱ* est impliqué dans une mesure précédente, étendre *yⁱ* avec autant de zéros que la dimension de *δXₙⁱ,* et rajouter à *jⁱ* autant de lignes de zéros, puis autant de colonnes de zéros.
[4] S'il y a une mesure *Yᵢⱼ* entre *δXₙ^{i et} δXₙ^{j}* avec j<i
[5] Mise à jour en forme d'information avec ${H}^{˜} = \left[…{H}_{i}…{H}_{j}…\right]$ les blocs étant d'indices i et j : ${y}^{i} ← {y}^{i} + {{H}^{˜}}^{T} {R}^{- 1} {Y}_{ij}$ $et {J}^{i} ← {J}^{i} + {{H}^{˜}}^{T} {R}^{- 1} {H}^{˜}$
[6] si *δXₙ^{j}* n'est pas impliqué dans une mesure antérieure, fusion de *δXₙ^{j}* dans l'information étendue : ${y}_{i}^{i} ← {y}_{i}^{i} + {y}_{j}^{i} et {J}_{ii}^{i} ← {J}_{ii}^{i} + {J}_{ij}^{i} + {J}_{ji}^{i} + {J}_{jj}^{i}$ , où *yₖⁱ* désigne la partie de *yⁱ* correspondant au clone *δXₙ^{k} et Jₖₗ ⁱ* correspond au bloc d'information associé à *δXₙ^{k} et δXₙ^{l},* puis suppression des blocs associés à *δXₙ^{j},*
[7] Rétropropagation de l'information étendue : ${y}^{i - 1} ← {{F}^{˜}}^{T} {\left(Id+{J}^{i}Q\right)}^{- 1} {y}^{i} avec F = \left[\begin{matrix}Id & \\ & F\end{matrix}\right]$ la matrice identité étant de dimension égale au nombre de clones mémorisés dans l'état alternatif, et ${J}^{i - 1} ← {{F}^{˜}}^{T} {\left(Id+{J}^{i}Q\right)}^{- 1} {J}^{i} {{F}^{˜}}^{T}$

Dans une étape E30, il est ensuite procédé à la fusion des estimations « directe » et « à rebours ». Il s'agit donc de fusionner les premier et second correctifs obtenus respectivement aux étapes E21 et E22.

Ainsi pour chaque itération i, il peut être procédé au calcul suivant du correctif final de ${\hat{V}}_{n}^{i} = {\left(Id+{P}^{i}{J}^{i}\right)}^{- 1} \left({x}^{i}+{P}^{i}{y}^{i}\right)$ . Puis, pour chaque *i,* la correction de l'état de navigation *δXₙ^{i*}* est obtenue comme le dernier bloc de l'état étendu V̂ₙⁱ.
Ensuite, le correctif déterminé, il est procédé à la correction (étape E40) de l'état de navigation sous la forme suivante :${\hat{X}}_{n + 1} = {\hat{X}}_{n} + {δX}_{n}^{*} .$

Le procédé proposé permet donc d'étendre le lisseur de Kalman à des problèmes couplant des mesures inertielles et des mesures quelconques, directes et/ou relatives, des états, le procédé se base sur l'utilisation jointe du lisseur et de la méthode dite de « clonage stochastique », détaillée ci-après. Ceci permet d'effectuer, entre autres, des fusions inertie-vision et inertie-LiDar basées sur le Maximum a posteriori numériquement stables, même en utilisant des centrales de navigation de haute précision, et dans des architectures embarquées à capacités de calculs réduites.

## Revendications

1. Procédé d'aide à la navigation d'un porteur mobile (1) comportant une centrale inertielle de navigation (10) comportant au moins un capteur inertiel (12), dans lequel, sur une fenêtre d'observations déterminée, les étapes suivantes sont mises en œuvre par une unité d'estimation (11) de la centrale inertielle de navigation (10) :
(E10) paramétrisation d'un système non-linéaire configuré pour estimer un état de navigation du porteur mobile (1) sur un intervalle de temps donné à une itération n en fonction d'un modèle cinématique et/ou de mesures acquises par le capteur inertiel (12) ;
(E20) linéarisation dudit système de sorte à ce que le système exprime un état de navigation à l'itération n en fonction de l'état à l'itération n-1 et d'un correctif à cet état de navigation, ledit système étant initialisé par un premier état à priori ;
(E21) détermination d'un premier correctif de l'état de navigation à l'itération n combinant un filtrage de Kalman du système à un clonage stochastique, le clonage stochastique consistant à dupliquer des états antérieurs du système à des états postérieurs du système ;
(E22) estimation d'un second correctif de l'état de navigation à l'itération n par un filtre d'information fonctionnant à rebours et clonage stochastique, le filtre d'information fonctionnant à rebours consistant à un calcul récursif du vecteur et
de la matrice d'information d'une loi gaussienne représentant l'information issue des états postérieurs, effectué depuis le dernier vers le premier pas de temps de la fenêtre ;
(E30) détermination d'un troisième correctif qui est une moyenne pondérée des premier et second correctif ; et
(E40) correction de l'état de navigation à l'itération n en fonction du troisième correctif, ledit état corrigé étant utilisé à l'itération n+1,
dans lequel le système non linéaire configuré pour estimer l'état de navigation s'exprime de la manière suivante : $X * = {argmin}_{X} {\sum }_{k} {\left‖{ψ}_{k}\left(X\right)\right‖}_{{P}_{k}}^{2} ,$
où les *ψₖ* sont des fonctions de coût associées aux mesures de chaque capteur, *Pₖ* est la matrice de covariance associée à la k-ème mesure, c'est-à-dire l'incertitude qu'on lui associe, la notation ${\left‖e\right‖}_{{P}_{k}}^{2} = {e}^{T} {P}_{k}^{- 1} e$
représente une norme euclidienne pondérée par l'inverse de la matrice *Pₖ*,
dans lequel le système non-linéaire estimant un état de navigation *X** du porteur mobile (1) est linéarisé pour définir un correctif *δXₙ*^{*} à l'état estimé sous la forme suivante ${δX}_{n}^{∗} = {argmin}_{δX} {\sum }_{k} {\left‖{A}_{k}δX-{b}_{k}\right‖}_{{P}_{k}}^{2} .$

2. Procédé d'aide à la navigation d'un porteur mobile (1) selon la revendication précédente dans lequel
l'étape (E21) d'estimation par le filtre de Kalman et clonage stochastique du premier correctif est réalisée au cours de pas de temps successifs, un pas de temps comprenant des étapes de :
• propagation d'un état de navigation précédent du porteur en un état propagé en fonction d'un modèle cinématique et/ou de mesures acquises par au moins un capteur inertiel (12),
• mise à jour de l'état propagé en fonction de mesures directes ou relatives acquises par au moins un capteur complémentaire (13),
l'étape (E22) d'estimation du second correctif par le filtre d'information itératif et clonage stochastique est réalisée au cours de pas de temps successifs, et comporte pour un pas de temps les étapes de :
• rétropropagation d'un correctif d'état de navigation postérieur du porteur en un correctif de l'état rétropropagé en fonction d'un modèle cinématique et/ou de mesures acquises par au moins un capteur inertiel (12),
• mise à jour du correctif de l'état rétropropagé en fonction de mesures directes ou relatives acquises par au moins un capteur complémentaire (13).

3. Procédé d'aide à la navigation d'un porteur mobile (1) selon la revendication précédente dans lequel
l'étape (E21) d'estimation par le filtre de Kalman et clonage stochastique du premier correctif, le correctif de l'état de navigation propagé par le filtre kalman comporte un clone d'un correctif de l'état de navigation antérieur au correctif de l'état de navigation propagé, tant que ledit correctif de l'état de navigation antérieur intervient dans une mesure relative d'un correctif d'état ultérieur au correctif de l'état de navigation propagé ; et dans lequel
dans l'étape (E22) d'estimation du second correctif par le filtre d'information fonctionnant à rebours et clonage stochastique, le correctif de l'état de navigation rétropropagé par le filtre d'information fonctionnant à rebours comporte un clone d'un correctif d'état de navigation ultérieur au correctif de l'état de navigation rétropropagé, tant que ledit correctif de l'état de navigation ultérieur intervient dans une mesure relative d'un correctif d'état antérieur au correctif de l'état de navigation propagé.

4. Procédé d'aide à la navigation d'un porteur mobile (1) selon l'une des revendications 2 à 3, dans lequel l'étape de propagation met en œuvre une matrice de transition augmentée sous la forme $\left[\begin{matrix}Id & \\ & F\end{matrix}\right]$ , avec F correspondant à une matrice de transition qui relie un correctif d'état précédent à un correctif d'état actuel k, et Id une matrice identité de dimension égale au nombre de clone des états passés.

5. Procédé d'aide à la navigation d'un porteur mobile (1) selon l'une des revendications 2 à 4, dans lequel l'étape de mise à jour met en œuvre une matrice d'observation augmentée sous la forme *H̃* = [...Hᵢ *...Hⱼ* ...], les blocs étant d'indices i et j, le reste étant composé de zéros.

6. Unité d'estimation (11) d'un porteur mobile (1) configurée pour mettre en œuvre le procédé selon l'une des revendications 1 à 5.

7. Centrale inertielle de navigation (10) d'un porteur mobile (1) comprenant :
une interface de réception de mesures inertielles (21) acquises par au moins un capteur inertiel (12),
une interface de réception de mesures complémentaires (22) acquises par au moins un capteur complémentaire (13),
une unité d'estimation (11) selon la revendication 6 pour estimer un état de navigation de la centrale à partir de mesures acquises par l'interface de réception de mesures inertielles (21) et l'interface de réception de mesures complémentaires (22).

8. Produit programme d'ordinateur comprenant des instructions de code de programme pour l'exécution des étapes du procédé selon l'une des revendications 1 à 5, lorsque ce programme est exécuté par une unité d'estimation (11) d'une trajectoire d'un porteur mobile (1).

## Patentansprüche

1. Verfahren zur Navigationsunterstützung eines mobilen Trägers (1), der ein Trägheitsnavigationssystem (10) aufweist, das mindestens einen Inertialsensor (12) aufweist, wobei über ein bestimmtes Beobachtungsfenster die folgenden Schritte von einer Schätzeinheit (11) des Trägheitsnavigationssystems (10) ausgeführt werden:
(E10) Parametrieren eines nichtlinearen Systems, das dazu konfiguriert ist, einen Navigationszustand des mobilen Trägers (1) über ein gegebenes Zeitintervall bei einer Iteration n in Abhängigkeit von einem kinematischen Modell und/oder von durch mindestens einen Inertialsensor (12) erfassten Messwerten zu schätzen;
(E20) Linearisieren des Systems derart, dass das System einen Navigationszustand bei der Iteration n in Abhängigkeit von dem Zustand bei der Iteration n-1 und einem Korrekturwert für diesen Navigationszustand ausdrückt, wobei das System durch einen ersten A-priori-Zustand initialisiert wird;
(E21) Bestimmen eines ersten Korrekturwerts des Navigationszustands bei der Iteration n unter Kombination einer Kalman-Filterung des Systems mit einem stochastischen Klonen, wobei das stochastische Klonen darin besteht, frühere Zustände des Systems zu späteren Zuständen des Systems zu duplizieren;
(E22) Schätzen eines zweiten Korrekturwerts des Navigationszustands bei der Iteration n durch einen rückwärts arbeitenden Informationsfilter und stochastisches Klonen, wobei der rückwärts arbeitende Informationsfilter aus einer rekursiven Berechnung des Informationsvektors und der Informationsmatrix einer Gauß'schen Verteilung besteht, welche die aus den späteren Zuständen stammende Information repräsentiert, ausgeführt vom letzten bis zum ersten Zeitschritt des Fensters;
(E30) Bestimmen einer dritten Korrekturwert, der ein gewichtetes Mittel des ersten und zweiten Korrekturwerts ist; und
(E40) Korrigieren des Navigationszustands bei der Iteration n in Abhängigkeit von dem dritten Korrekturwert, wobei der korrigierte Zustand bei der Iteration n+1 verwendet wird,
wobei das nichtlineare System dazu konfiguriert ist, den Navigationszustand zu schätzen, der sich wie folgt ausdrückt: $X * = {argmin}_{X} {\sum }_{k} {\left‖{ψ}_{k}\left(X\right)\right‖}_{{P}_{k}}^{2} ,$
wobei die *ψₖ* Kostenfunktionen sind, die den Messwerten jedes Sensors zugeordnet sind,
*Pₖ* die Kovarianzmatrix ist, die dem k-ten Messwert zugeordnet ist, das heißt die ihm zugeordnete Unsicherheit, wobei die Notation ${\left‖e\right‖}_{{P}_{k}}^{2} = {e}^{T} {P}_{k}^{- 1} e$
eine durch die Inverse der Matrix *Pₖ* gewichtete euklidische Norm darstellt,
wobei das nichtlineare System, das einen Navigationszustand *X** des mobilen Trägers (1) schätzt, linearisiert wird, um einen Korrekturwert *δXₙ^{*}* für den geschätzten Zustand anhand der folgenden Form zu definieren ${δX}_{n}^{∗} = {argmin}_{δX} {\sum }_{k} {\left‖{A}_{k}δX-{b}_{k}\right‖}_{{P}_{k}}^{2} .$

2. Verfahren zur Navigationsunterstützung eines mobilen Trägers (1) nach vorstehendem Anspruch, wobei
der Schritt (E21) des Schätzens des ersten Korrekturwerts durch den Kalman-Filter und stochastisches Klonen im Laufe aufeinanderfolgender Zeitschritte durchgeführt wird, wobei ein Zeitschritt folgende Schritte umfasst:
• Propagierung eines vorherigen Navigationszustands des Trägers in einen propagierten Zustand in Abhängigkeit von einem kinematischen Modell und/oder von durch mindestens einen Inertialsensor (12) erfassten Messwerten,
• Aktualisierung des propagierten Zustands in Abhängigkeit von direkten oder relativen Messwerten, die durch mindestens einen komplementären Sensor (13) erfasst wurden,
wobei der Schritt (E22) des Schätzens des zweiten Korrekturwerts durch den iterativen Informationsfilter und stochastisches Klonen im Laufe aufeinanderfolgender Zeitschritte durchgeführt wird und für einen Zeitschritt die folgenden Schritte aufweist:
• Rückwärtspropagierung eines späteren Korrekturwerts des Navigationszustands des Trägers in einen rückwärtspropagierten Korrekturwert des Zustands in Abhängigkeit von einem kinematischen Modell und/oder von durch mindestens einen Inertialsensor (12) erfassten Messwerten,
• Aktualisierung des rückwärtspropagierten Korrekturwerts des Zustands in Abhängigkeit von direkten oder relativen Messwerten, die durch mindestens einen komplementären Sensor (13) erfasst wurden.

3. Verfahren zur Navigationsunterstützung eines mobilen Trägers (1) nach vorstehendem Anspruch, wobei
der Schritt (E21) des Schätzens der ersten Korrekturwerts durch den Kalman-Filter und stochastisches Klonen der durch den Kalman-Filter propagierten Korrekturwert des Navigationszustands einen Klon eines Korrekturwerts eines Navigationszustands aufweist, der zeitlich vor dem propagierten Korrekturwert des Navigationszustands liegt, solange der vorherige Korrekturwert des Navigationszustands in eine relative Messung eines Korrekturwerts eines Zustands eingeht, der zeitlich nach dem propagierten Korrekturwert des Navigationszustands liegt; und wobei
in dem Schritt (E22) des Schätzens des zweiten Korrekturwerts durch den rückwärts arbeitenden Informationsfilter und stochastisches Klonen der durch den rückwärts arbeitenden Informationsfilter rückwärtspropagierte Korrekturwert des Navigationszustands einen Klon eines Korrekturwerts des Navigationszustands aufweist, der zeitlich nach dem rückwärtspropagierten Korrekturwert des Navigationszustands liegt, solange der nachfolgende Korrekturwert des Navigationszustands in eine relative Messung eines Korrekturwerts eines Zustands eingeht, der zeitlich vor dem propagierten Korrekturwert des Navigationszustands liegt.

4. Verfahren zur Navigationsunterstützung eines mobilen Trägers (1) nach einem der Ansprüche 2 bis 3, wobei der Schritt der Propagierung eine erweiterte Übergangsmatrix in der Form ausführt $\left[\begin{matrix}Id & \\ & F\end{matrix}\right] ,$ wobei F einer Übergangsmatrix entspricht, die einen vorherigen Zustandskorrekturwert mit einem aktuellen Zustandskorrekturwert k verknüpft, und Id einer Identitätsmatrix mit einer Dimension entspricht, die gleich der Anzahl der Klone der vergangenen Zustände ist.

5. Verfahren zur Navigationsunterstützung eines mobilen Trägers (1) nach einem der Ansprüche 2 bis 4, wobei der Schritt der Aktualisierung eine erweiterte Beobachtungsmatrix in der Form *H̃* = [..Hi ...*Hⱼ* ..] ausführt, wobei die Blöcke die Indizes i und j aufweisen und der Rest aus Nullen besteht.

6. Schätzeinheit (11) für einen mobilen Träger (1), die zur Ausführung des Verfahrens nach einem der Ansprüche 1 bis 5 konfiguriert ist.

7. Trägheitsnavigationssystem (10) für einen mobilen Träger (1), umfassend:
eine Schnittstelle zum Empfang von Trägheitsmesswerten (21), die durch mindestens einen Inertialsensor (12) erfasst wurden,
eine Schnittstelle zum Empfang von komplementären Messwerten (22), die durch mindestens einen komplementären Sensor (13) erfasst wurden,
eine Schätzeinheit (11) nach Anspruch 6 zur Schätzung eines Navigationszustands des Systems anhand von Messwerten, die über die Schnittstelle zum Empfang von Trägheitsmesswerten (21) und die Schnittstelle zum Empfang von komplementären Messwerten (22) erfasst wurden.

8. Computerprogrammprodukt, das Programmcodeanweisungen zur Ausführung der Schritte des Verfahrens nach einem der Ansprüche 1 bis 5 umfasst, wenn dieses Programm von einer Einheit (11) zur Schätzung einer Bewegungsbahn eines mobilen Trägers (1) ausgeführt wird.

## Claims

1. A method of navigation assistance for a mobile carrier (1) including an inertial navigation unit (10) including at least one inertial sensor (12), wherein, over a determined observation window, the following steps are implemented by an estimation unit (11) of the inertial navigation unit (10):
(E10) parameterization of a non-linear system configured to estimate a navigation state of the mobile carrier (1) over a given time interval at an iteration n as a function of a kinetic model and/or of measurements acquired by at least one inertial sensor (12);
(E20) linearization of said system such that the system expresses a navigation state at the iteration n as a function of the state at the iteration n-1 and of a correction to this navigation state, said system being initialized by a first *a priori* state;
(E21) determination of a first correction of a navigation state at the iteration n combining a Kalman filter of the stochastic cloning system, the stochastic cloning consisting in duplicating the past states of the system to future states od the system;
(E22) estimation of a second correction of the navigation state at the iteration n by an information filter running backwards and stochastic cloning, the information filter running backwards consisting in a recursive computation of the vector and of the information matrix of a Gaussian law representing the information from the future states, carried out from the last to the first timestep of the window;
(E30) determination of a third correction which is a weighted mean of the first and second corrections; and
(E40) correction of the navigation state at the iteration n as a function of the third correction, said corrected state being used at the iteration n+1,
wherein the non-linear system configured to estimate the navigation state is expressed as follows: $X * = {argmin}_{X} {\sum }_{k} {\left‖{ψ}_{k}\left(X\right)\right‖}_{{P}_{k}}^{2} ,$
where the *ψₖ* are cost functions associated with the measurements of each sensor, *Pₖ* is the covariance matrix associated with the k-th measurement, i.e. the uncertainty that is associated therewith,
the notation ${\left‖e\right‖}_{{P}_{k}}^{2} = {e}^{T} {P}_{k}^{- 1} e$
represents a Euclidian norm weighted by the inverse of the matrix *Pₖ*
wherein the non-linear system estimating a navigation state *X** of the mobile carrier (1) is linearized to define a correction *δXₙ^{*}* in the estimated state of the following form ${δX}_{n}^{∗} = {argmin}_{δX} {\sum }_{k} {\left‖{A}_{k}δX-{b}_{k}\right‖}_{{P}_{k}}^{2} .$

2. The method of navigation assistance for a mobile carrier (1) as claimed in the preceding claim, wherein
the step (E21) of estimation by the Kalman filter and stochastic cloning of the first correction is done over successive timesteps, one timestep comprising steps of:
• propagation of a preceding navigation state of the carrier into a propagated state as a function of a kinetic model and/or of measurements acquired by at least one inertial sensor (12),
• updating of the propagated state as a function of direct or relative measurements acquired by at least one additional sensor (13),
the step (E22) of estimation of the second correction by the iterative information filter and stochastic cloning is done over successive timesteps, and includes, for a timestep the steps of:
• back-propagating a correction of the posterior navigation state of the carrier into a correction of the back-propagated state as a function of a kinetic model and/or of measurements acquired by at least one inertial sensor (12),
• updating of the correction of the back-propagated state as a function of direct or relative measurements acquired by at least one additional sensor (13).

3. The method of navigation assistance for a mobile carrier (1) as claimed in the preceding claim, wherein
the step (E21) of estimation by the Kalman filter and stochastic cloning of the first correction, the correction of the navigation state propagated by the Kalman filter includes a clone of a correction of the navigation state earlier than the correction of the propagated navigation state, as long as said correction of the earlier navigation state is involved in a relative measurement of a state correction later than the correction of the propagated navigation state; and wherein
in the step (E22) of estimation of the second correction by the information filter running backwards and stochastic cloning, the correction of the navigation state back-propagated by the information filter running backwards includes a clone of a navigation state correction later than the correction of the back-propagated navigation state, as long as said correction of the later navigation state is involved in a relative measurement of a state correction earlier than the correction of the propagated navigation state.

4. The method of navigation assistance for a mobile carrier (1) as claimed in one of claims 2 to 3, wherein the propagation step implements an augmented transition matrix in the form $\left[\begin{matrix}Id & \\ & F\end{matrix}\right] ,$ with F corresponding to a transition matrix which relates a preceding state correction to a current state correction k, and Id an identity matrix of dimensions equal to the number of clones of the past states.

5. The method of navigation assistance for a mobile carrier (1) as claimed in one of claims 2 to 4, wherein the updating step implements an augmented observation matrix in the form *H̃* = [...Hᵢ ...*Hⱼ* ...], the blocks being of indices i and j, the rest being composed of zeros.

6. An estimation unit (11) of a mobile carrier (1) configured to implement the method as claimed in one of claims 1 to 5.

7. An inertial navigation unit (10) of a mobile carrier (1) comprising:
an interface for receiving inertial measurements (21) acquired by at least one inertial sensor (12),
an interface for receiving additional measurements (22) acquired by at least one additional sensor (13),
an estimation unit (11) as claimed in claim 6 for estimating a navigation state of the unit on the basis of measurements acquired by the interface for receiving inertial measurements (21) and the interface for receiving additional measurements (22).

8. A computer program product comprising program code instructions for executing the steps of the method as claimed in one of claims 1 to 5, when this program is executed by an estimation unit (11) of a trajectory of a mobile carrier (1).
